# FASCICULE DE BREVET EUROPEEN

(11) **EP 3 099 559 B1**
(45) Date de publication et mention de la délivrance du brevet: **26.09.2018**
(21) Numéro de dépôt: 15702524.8
(22) Date de dépôt: 06.01.2015
(51) Int. Cl.: B62D 21/15, B60R 19/34

(54) **BRANCARD AVANT D'UN VÉHICULE AUTOMOBILE ET PROCÉDÉ DE FABRICATION D'UN TEL BRANCARD.**
VORDERBAU EINES KRAFTFAHRZEUGES UND HERSTELLUNGSVERFAHREN EINES SOLCHEN VORDERBAUS
FRONT RAIL ASSEMBLY OF A MOTOR VEHICLE AND MANUFACTURING METHOD OF SUCH FRONT RAIL ASSEMBLY

(30) Priorité: 30.01.2014 FR 1450737
(43) Date de publication de la demande: 07.12.2016
(73) Titulaire: PSA Automobiles SA, 78300 Poissy (FR)
(72) Inventeur: BERGER, Flavien, F-25630 Sainte Suzanne (FR); CADET, Stéphane, F-70110 Magny (FR)
(74) Mandataire: Fosse, Danièle
(86) Numéro de dépôt international: PCT/FR2015/050015
(87) Numéro de publication internationale: WO 2015/114228

(56) Documents cités:
- EP-A2- 2 266 846
- WO-A1-03/042024
- WO-A2-2009/051816
- JP-A- H10 244 955
- US-A- 3 508 633
- US-A- 4 031 978
- US-A1- 2006 028 052
- US-A1- 2008 169 660
- US-A1- 2010 102 592
- US-B1- 6 695 393

## Description

La présente invention se rapporte à un brancard avant d'un véhicule automobile ainsi qu'à un procédé de fabrication de ce brancard.

L'invention appartient au domaine des dispositifs pour absorber les chocs à l'avant des véhicules automobiles.

Un véhicule automobile comporte habituellement, en avant de son habitacle, un groupe motopropulseur permettant sa propulsion et deux brancards avant. Les brancards sont généralement constitués d'une poutre métallique disposée selon un axe longitudinal du véhicule, de part et d'autre du groupe motopropulseur. Les brancards permettent de protéger les occupants du véhicule lors d'un choc frontal du véhicule avec un obstacle, en évitant l'intrusion du groupe motopropulseur dans l'habitacle du véhicule.

Lors d'un tel choc, pour la protection des occupants de l'habitacle du véhicule, il est également nécessaire que certains éléments absorbent une partie de l'énergie cinétique du véhicule et de l'obstacle percuté.

On connaît du document FR-A-2 375 500 un dispositif d'absorption de choc, disposé sur la partie avant d'un véhicule automobile, permettant d'absorber, par déformation plastique, l'énergie d'un choc avec un obstacle.

Un tel dispositif est conçu pour se déformer avec un niveau d'effort prédéfini, fonction par exemple de la masse du véhicule. Il est par conséquent nécessaire de concevoir des dispositifs d'absorption différents en fonction de la masse du véhicule, ce qui n'est pas économique.

L'invention a pour but de remédier aux inconvénients de l'art antérieur.

Dans ce but, la présente invention propose un brancard avant selon la revendication 1.

Ainsi, l'invention permet d'ajuster de manière économique le niveau d'effort avec lequel le brancard se déforme lors d'un choc.

Selon une caractéristique particulière, le brancard est de forme générale tubulaire.

Selon une caractéristique particulière, le brancard présente une section générale rectangulaire.

Selon une caractéristique particulière, le brancard présente une section réduite à l'endroit des première et deuxième zones de déformation.

Selon une caractéristique particulière, le brancard comporte un axe principal de déformation et la première découpe comporte une plus grande dimension dans un axe perpendiculaire à cet axe principal de déformation.

Selon une caractéristique particulière, la première découpe est obtenue par poinçonnage.

Selon une caractéristique particulière, le brancard comporte au moins une troisième zone de déformation, munie d'une deuxième découpe positionnée en regard de la première découpe définie plus haut.

L'invention à également pour objet un procédé de fabrication d'un brancard tel que décrit précédemment, comportant une étape consistant à réaliser des emboutis sur la deuxième zone de déformation décrite plus haut pour qu'elle se déforme avec un premier niveau d'effort en cas de choc, ce procédé étant remarquable en ce qu'il comporte en outre une étape consistant à réaliser sur la deuxième zone de déformation au moins une première découpe de dimensions déterminées pour qu'elle se déforme avec un deuxième niveau d'effort inférieur au premier niveau d'effort.

Dans le même but, l'invention a aussi pour objet un véhicule automobile comportant un brancard tel que brièvement décrit plus haut.

L'invention sera mieux comprise et d'autres aspects et avantages apparaîtront plus clairement à la lecture de la description qui suit d'un mode particulier de réalisation, donné à titre d'exemple nullement limitatif et en référence aux dessins qui l'accompagnent, dans lesquels :
- la figure 1 est une vue en perspective d'un véhicule équipé de brancards avant conformes à l'invention ;
- la figure 2 est une vue de dessus agrandie de l'avant du véhicule de la figure 1 ;
- la figure 3 est une vue de côté d'un brancard avant conforme à l'invention ;
- les figures 4 et 5 sont des vues en perspective du brancard de la figure 3 suivant des étapes d'un procédé de fabrication selon l'invention.

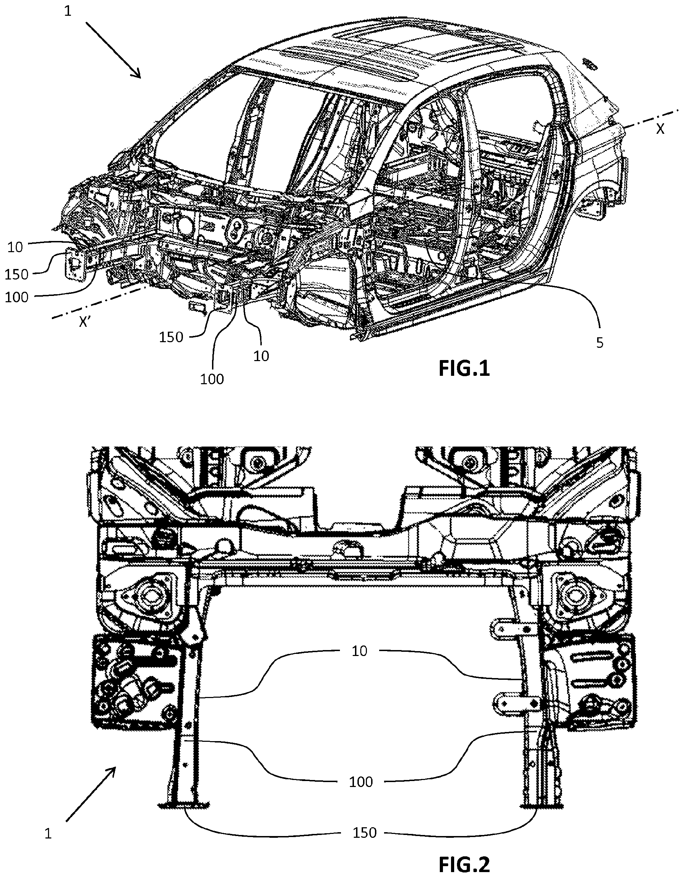

Sur les figures 1 à 5, les mêmes repères sont utilisés pour désigner les mêmes pièces.

Le véhicule automobile 1 représenté sur la figure 1 comporte deux brancards 10 disposés en avant d'un habitacle 5.

Chaque brancard 10 comporte une poutre 100, généralement métallique, par exemple en acier, présentant deux extrémités et un plateau 150.

La poutre 100 est de préférence de forme générale tubulaire et est liée, généralement par soudage, à l'habitacle 5. Le plateau 150 est lié à l'extrémité de la poutre 100 opposée à l'habitacle 5. Le plateau 150 permet de fixer au brancard 10 des éléments du véhicule 1 non illustrés sur la figure 1.

A titre d'exemple non limitatif, la poutre 100 est constituée d'une tôle d'épaisseur comprise entre 1,45 et 1,75 mm.

La figure 2 présente une vue agrandie, de dessus, de la partie avant du véhicule 1. Les brancards 10 sont disposés parallèlement à l'axe longitudinal XX' du véhicule 1, de part et d'autre d'une zone centrale dans laquelle est généralement disposé un groupe motopropulseur (non illustré).

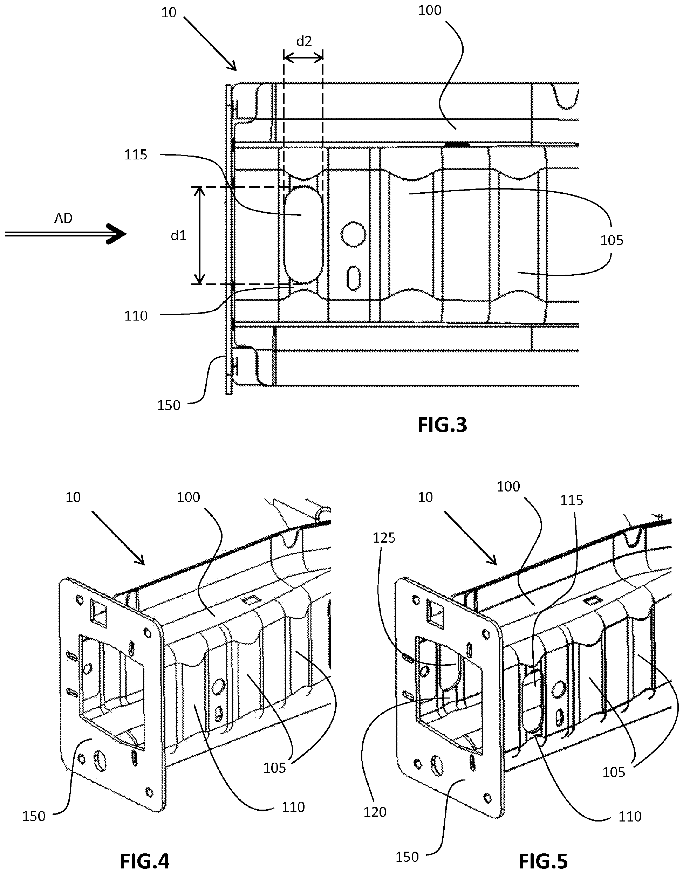

La figure 3 est une vue de côté d'un brancard 10 conforme à l'invention. La poutre 100 est munie de premières zones de déformation 105 et d'une deuxième zone de déformation110.

Les premières et deuxième zones de déformation 105 et 110 sont des emboutis réalisés sur la poutre 100 pour favoriser la déformation par compression du brancard 10, lors d'un choc selon un axe principal de déformation AD. De par leurs formes et leurs dimensions, en cas de choc, les premières zones de déformation 105 sont agencées pour se déformer avec un premier niveau déterminé d'effort E1. Le brancard 10 présente une section réduite à l'endroit des zones de déformation 105 et 110.

Les premières zones de déformation 105 sont par exemple agencées pour que le premier niveau d'effort E1 soit égal à 160 kN.

Conformément à l'invention, la deuxième zone de déformation 110 comporte en outre une découpe 115 de longueur d1 et de largeur d2. Les dimensions d1 et d2 sont définies pour que, en cas de choc selon l'axe principal de déformation AD, la deuxième zone de déformation 110 se déforme avec un deuxième niveau déterminé d'effort E2, inférieur au premier niveau d'effort E1.

Par exemple, la longueur d1 de la découpe 115 est comprise entre 20 et 70 mm et la largeur d2 est comprise entre 10 et 30 mm. Le deuxième niveau d'effort E2 peut dans ce cas être compris entre 110 et 140 kN, inférieur au niveau d'effort E1.

La découpe 115 est par exemple réalisée par poinçonnage du brancard 10.

Dans une variante, non illustrée, la deuxième zone de déformation 110 peut comporter plusieurs découpes 115.

Dans le mode de réalisation représenté sur la figure 3, la poutre 100 ne comporte qu'une deuxième zone de déformation 110 munie d'une découpe 115. Dans une autre variante, la poutre 100 peut comporter plusieurs deuxièmes zones de déformation 110 comportant chacune une ou plusieurs découpes 115.

Par ailleurs, une troisième zone de déformation 120 (visible sur la figure 5), similaire à la deuxième zone de déformation 110, peut être munie d'une découpe 125, positionnée en regard de la découpe 115 de la deuxième zone de déformation 110.

Les figures 4 et 5 présentent des vues d'un brancard avant 10, lors d'étapes du procédé de fabrication de ce brancard 10.

Le procédé comporte une étape d'emboutissage, dont le résultat est visible sur la figure 4, permettant d'obtenir des emboutis au niveau des premières zones de déformation 105 et de la deuxième zone de déformation 110 du brancard 10. Les emboutis réalisés sur les premières zones de déformation 105 et sur la deuxième zone de déformation 110 sont agencés pour qu'elles se déforment, en cas de choc, avec un premier niveau d'effort E1.

Lors d'une étape de poinçonnage, dont le résultat est visible sur la figure 5, une découpe 115 est réalisée sur la deuxième zone de déformation 110 de longueur d1 et de largeur d2. Les dimensions d1 et d2 de la découpe 115 sont déterminées pour que la deuxième zone de déformation 110 se déforme, en cas de choc, avec un deuxième niveau d'effort E2, inférieur au premier niveau d'effort E1.

Une autre découpe 125 peut également être réalisée sur une troisième zone de déformation 120, en regard de la découpe 115 de la deuxième zone de déformation 110.

L'étape de poinçonnage peut par exemple être réalisée simultanément à l'étape d'emboutissage, avant une opération de soudage du brancard 10 sur le véhicule 1. En variante, l'étape de poinçonnage peut être réalisée après cette opération de soudage.

Ainsi, un brancard avant d'un véhicule conforme à l'invention et un procédé de fabrication d'un tel brancard permettent d'ajuster de manière économique le niveau d'effort avec lequel le brancard se déforme.

## Revendications

1. Brancard avant (10) d'un véhicule automobile (1) comportant une poutre (100), comportant au moins une première zone de déformation (105) agencée pour se déformer avec un premier niveau d'effort (E1) en cas de choc et au moins une deuxième zone de déformation (110), **caractérisé en ce que** les premières et deuxième zones de déformation (105) et (110) sont des emboutis réalisés sur la poutre (100) pour favoriser la déformation par compression du brancard 10, la deuxième zone de déformation (110) comportant au moins une première découpe (115) de dimensions (d1, d2) déterminées afin que ladite deuxième zone de déformation (110) se déforme en cas de choc avec un deuxième niveau d'effort (E2) inférieur au premier (E1).

2. Brancard (10) selon la revendication 1, **caractérisé en ce qu'**il est de forme générale tubulaire.

3. Brancard (10) selon la revendication 2, **caractérisé en ce qu'**il présente une section générale rectangulaire.

4. Brancard (10) selon la revendication 2 ou 3, **caractérisé en ce qu'**il présente une section réduite à l'endroit desdites première (105) et deuxième (110) zones de déformation.

5. Brancard (10) selon l'une quelconque des revendications précédentes comportant un axe principal de déformation (AD), **caractérisé en ce que** ladite première découpe (115) comporte une plus grande dimension (d1) dans un axe perpendiculaire audit axe principal de déformation (AD).

6. Brancard (10) selon l'une quelconque des revendications précédentes, **caractérisé en ce qu'**il comporte au moins une troisième zone de déformation (120) munie d'une deuxième découpe (125) positionnée en regard de ladite première découpe (115).

7. Procédé de fabrication d'un brancard (10) selon l'une quelconque des revendication précédentes, comportant une étape consistant à réaliser des emboutis sur ladite deuxième zone de déformation (110) pour qu'elle se déforme avec un premier niveau d'effort (E1) en cas de choc, **caractérisé en ce qu'**il comporte en outre une étape consistant à réaliser sur ladite deuxième zone de déformation (110) au moins une première découpe (115) de dimensions (d1, d2) déterminées pour qu'elle se déforme avec un deuxième niveau d'effort (E2) inférieur au premier (E1).

8. Procédé selon la revendication 7, **caractérisé en ce que** ladite première découpe (115) est obtenue par poinçonnage.

9. Véhicule automobile, **caractérisé en ce qu'**il comporte au moins un brancard (10) selon l'une quelconque des revendications 1 à 6.

## Patentansprüche

1. Vorderbau (10) eines Kraftfahrzeuges (1) mit einem Träger (100), mit mindestens einem ersten Verformungsbereich (105), der bei Aufprall zur Verformung mit einer ersten Belastungsebene (E1) ausgebildet ist und mindestens einem zweiten Verformungsbereich (110), **dadurch gekennzeichnet, dass** der erste und zweite Verformungsbereich (105) und (110) auf dem Träger (100) ausgebildete Einprägungen zur Förderung der Druckverformung des Vorderbaus 10 sind, wobei der zweite Verformungsbereich (110) mindestens einen ersten Ausschnitt (115) mit Abmessungen (d1, d2) umfasst, die derart bestimmt sind, dass sich der zweite Verformungsbereich (110) bei Aufprall mit einer zweiten Belastungsebene (E2), die niedriger als die erste (E1) ist, verformt.

2. Vorderbau (10) nach Anspruch 1, **dadurch gekennzeichnet, dass** er im Allgemeinen rohrförmig ist.

3. Vorderbau (10) nach Anspruch 2, **dadurch gekennzeichnet, dass** er einen im Allgemeinen rechteckigen Querschnitt aufweist.

4. Vorderbau (10) nach Anspruch 2 oder 3, **dadurch gekennzeichnet, dass** er an der Stelle des ersten (105) und zweiten (110) Verformungsbereichs einen verringerten Querschnitt aufweist.

5. Vorderbau (10) nach einem der vorstehenden Ansprüche, umfassend eine Hauptverformungsachse (AD), **dadurch gekennzeichnet, dass** der erste Ausschnitt (115) eine größere Abmessung (d1) in einer Achse senkrecht zur Hauptverformungsachse (AD) aufweist.

6. Vorderbau (10) nach einem der vorstehenden Ansprüche, **dadurch gekennzeichnet, dass** er mindestens einen dritten Verformungsbereich (120) aufweist, der mit einem zweiten Ausschnitt (125) versehen ist, der gegenüber dem ersten Ausschnitt (115) angeordnet ist.

7. Verfahren zur Herstellung eines Vorderbaus (10) nach einem der vorstehenden Ansprüche, das einen Schritt der Ausbildung der Einprägungen auf dem zweiten Verformungsbereich (110) zur Verformung mit einer ersten Belastungsebene (E1) bei Aufprall aufweist, **dadurch gekennzeichnet, dass** es weiter einen Schritt aufweist, der darin besteht, auf dem zweiten Verformungsbereich (110) mindestens einen ersten Ausschnitt (115) mit Abmessungen (d1, d2) auszuführen, die derart bestimmt sind, dass er sich mit einer zweiten Belastungsebene (E2), die niedriger ist als die erste (E1), verformt.

8. Verfahren nach Anspruch 7, **dadurch gekennzeichnet, dass** der erste Ausschnitt (115) durch Stanzen erhalten wird.

9. Kraftfahrzeug, **dadurch gekennzeichnet, dass** es mindestens einen Vorderbau (10) nach einem der Ansprüche 1 bis 6 aufweist.

## Claims

1. Front shaft (10) of a motor vehicle (1) comprising a beam (100), comprising at least one first deformation zone (105) arranged to be deformed with a first level of force (E1) in case of impact and at least one second deformation zone (110), **characterised in that** the first and second deformation zones (105) and (110) are stamps made on the beam (100) to favour deformation by compression of the shaft 10, the second deformation zone (110) comprising at least one first cut (115) of dimensions (d1, d2) determined such that said second deformation zone (110) is deformed in case of impact with a second level of force (E2) less than the first (E1).

2. Shaft (10) according to claim 1, **characterised in that** it is of a generally tubular shape.

3. Shaft (10) according to claim 2, **characterised in that** it has a generally rectangular section.

4. Shaft (10) according to claim 2 or 3, **characterised in that** it has a reduced section at the place of said first (105) and second (110) deformation zones.

5. Shaft (10) according to any one of the preceding claims comprising a main deformation axis (AD), **characterised in that** said first cut (115) comprises a greater dimension (d1) in an axis perpendicular to said main deformation axis (AD).

6. Shaft (10) according to any one of the preceding claims, **characterised in that** it comprises at least one third deformation zone (120) equipped with a second cut (125) positioned opposite said first cut (115).

7. Method for producing a shaft (10) according to any one of the preceding claims, comprising a step consisting of producing stamps on said second deformation zone (110) such that it is deformed with a first level of force (E1) in case of impact, **characterised in that** it further comprises a step consisting of producing on said second deformation zone (110), at least one first cut (115) of determined dimensions (d1, d2) such that it is deformed with a second level of force (E2) less than the first (E1).

8. Method according to claim 7, **characterised in that** said first cut (115) is obtained by punching.

9. Motor vehicle, **characterised in that** it comprises at least one shaft (10) according to any one of claims 1 to 6.
